# FASCICULE DE BREVET EUROPEEN

(11) **EP 0 691 993 B1**
(45) Date de publication et mention de la délivrance du brevet: **13.02.2002**
(21) Numéro de dépôt: 94911995.2
(22) Date de dépôt: 30.03.1994
(51) Int. Cl.: C08G 18/70, C08G 18/80

(54) **PROCEDE DE PREPARATION D'EMULSIONS AQUEUSES D'HUILES ET/OU DE GOMMES ET/OU DE RESINES (POLY)ISOCYANATES AVANTAGEUSEMENT MASQUES ET EMULSIONS OBTENUES**
VERFAHREN ZUR HERSTELLUNG VON WÄSSRIGEN EMULSIONEN VON ÖLEN UND/ODER GUMMI UND/ODER VORZUGSWEISE MASKIERTEN (POLY)ISOCYANATHARZEN, UND RESULTIERENDE EMULSIONEN
METHOD FOR PREPARING AQUEOUS EMULSIONS OF OILS AND/OR GUMS AND/OR PREFERABLY MASKED (POLY)ISOCYANATE RESINS, AND RESULTING EMULSIONS

(30) Priorité: 31.03.1993 FR 9303795; 31.03.1993 FR 9303796
(43) Date de publication de la demande: 17.01.1996
(73) Titulaire: RHODIA CHIMIE, 92408 Courbevoie Cédex (FR)
(72) Inventeur: DERIAN, Paul-Jo[l, F-92260 Fontenay-aux-Roses (FR); LANGLOIS, Bruno, F-91700 Sainte-Geneviève-des-Bois (FR); SENECHAL, Alain, F-94700 Maison-Alfort (FR)
(74) Mandataire: Ricalens, François
(86) Numéro de dépôt international: FR9400353
(87) Numéro de publication internationale: WO9422935

(56) Documents cités:
- EP-A- 0 122 552
- EP-A- 0 276 465
- EP-A- 0 464 781
- EP-A- 0 524 111
- EP-A- 0 524 518
- DE-A- 3 807 555
- DATABASE CHEMABS CHEMICAL ABSTRACTS SERVICE, COLUMBUS, OHIO, US 115 (12): 116510p; 23 Septembre 1991, & JP,A,3 064 390 (TORAY INDUSTRIES) 19 Mars 1991

## Description

La présente invention a pour objet un procédé de préparation d'émulsions d'huiles et/ou de gommes et/ou de résines, de préférence visqueuses. Il a plus particulièrement pour objet un procédé de mise en émulsion des (poly)isocyanates.

Par ailleurs, dans l'activité des peintures et des vernis, on utilise largement les diisocyanates notamment alcoylène diisocyanates (tolonates) et leurs dérivés de type biuret ou leurs trimères.

Toutefois parmi les problèmes qui, à ce jour, restent non résolu, il y en a un particulièrement aigu, à savoir l'utilisation en grande quantité de solvant organique, dont la présence est réputée toxique et néfaste pour l'environnement.

C'est pourquoi un des buts de la présente invention est de fournir un procédé qui permette l'obtention d'une dispersion stable dans l'eau de (poly)isocyanates.

Un autre but de la présente invention est de fournir un monomère qui permette des formulations de (poly)isocyanates en phase aqueuse, en vue de répondre à l'évolution des techniques et des réglementations tendant à faire disparaître les solvants organiques.

Pour résoudre ce problème on a déjà décrit la préparation d'émulsions aqueuses d'huiles, notamment de haute viscosité, par introduction séparée en deux étapes de deux types d'agents tensioactifs d'amphiphilie différentes (ayant des indices "HLB" différents lorsque cette échelle est utilisable) dans un appareil classique de malaxage.

Toutefois ces techniques sont dispendieuses en énergies et difficiles à mettre en oeuvre. Elles demandent des dispositifs de malaxage susceptibles de donner des cisaillements élevés.

C'est pourquoi un des buts de la présente invention est de fournir un procédé qui permette d'utiliser des appareillages ne donnant pas des cisaillements élevés.

Un autre but de la présente invention est de fournir un procédé qui évite des consommations d'énergies élevées.

Un autre but de la présente invention est de fournir un procédé qui permette d'obtenir une répartition granulométrique étroite de gouttelettes particulièrement fines.

La demanderesse a trouvé un procédé de préparation d'émulsions aqueuses d'huiles et/ou de gommes et/ou de résines (poly)isocyanate(s), caractérisé en ce qu'on malaxe un mélange comportant
100 parties en poids d'une phase (poly)isocyanate avantageusement masqué (A) de viscosité dynamique à 25°C, au moins égale à 3 Pa.s., de préférence au moins égale à 30 Pa.s., ou de consistance à 25°C au moins égale à 200, phase (poly)isocyanate avantageusement masqué comprenant au moins une huile et/ou au moins une gomme et/ou au moins une résine à groupes (poly)isocyanate(s) avantageusement masqué(s);
2 à 20 parties en poids, de préférence de 3 à 15 parties en poids d'eau ;
3 à 20 parties en poids, de préférence de 5 à 15 parties en poids d'au moins un agent tensioactif (B) ou une combinaison de 0,5 à 10 parties en poids, de préférence de 1 à 10 parties en poids d'au moins un agent tensioactif (B) et de 2,5x10⁻⁴ à 20 parties en poids, de préférence de 0,001 à 15 parties en poids d'au moins un polymère hydrosoluble épaississant (C) de masse moléculaire supérieure à 10 000 g/mole, de préférence supérieure à 100 000 g/mole.

Ledit agent tensioactif ou mélange d'agents tensioactifs présentant un HLB supérieur à 10 (lorsque cette échelle est utilisable) et les quantités relatives d'eau, de(s) constituant(s) (B) et éventuellement (C) étant telles que la viscosité ou la consistance du mélange eau+agent(s) tensioactif(s) + polymère(s) hydrosoluble(s) épaississant(s) éventuel(s) soit égale ou supérieure au dixième de la viscosité ou consistance de la phase (poly)isocyanate avantageusement masqué (A), de préférence égale ou supérieure à la viscosité ou à consistance de la phase (poly)isocyanate avantageusement masqué (A).

Ledit malaxage étant réalisé dans un appareillage assurant un cisaillement dans l'eau pure au moins égal à 10² et au plus égal à 10⁵, pendant une durée suffisante pour obtenir une émulsion de type "huile dans eau" de granulométrie de l'ordre de 0,1 à 5 micromètres, de préférence de l'ordre de 0,2 à 3 micromètres ; puis en ce qu'on dilue éventuellement le milieu avec de l'eau en fonction du taux d'extrait sec désiré.

Selon l'invention on obtient une faible dispersion avec un d₉₀ - d₁₀ au plus égal à 4, plus généralement à 1,5 micromètres, de préférence à 1 micromètre.

Pour une bonne réalisation de l'invention, les mesures de viscosité dynamique sont réalisées de préférence à 25 °C à l'aide d'un viscosimètre Brookfield selon la norme AFNOR NFT 76 102 de février 1972 ; la détermination de la consistance peut être faite par mesure de la pénétrabilité à l'aide d'un pénétromètre par exemple selon une des normes AFNOR NFT 60 119, NFT 60 123, NFT 66 004, ASTM D 217, D 937, D 1321, D 5.

Comme exemples de (poly)isocyanate(s) avantageusement masqué(s) (A) pouvant être mises en oeuvre, on peut citer celles consistant en :
- les poly méthylène diisocyanate (en général en ω, ω'), l'enchaînement des méthylènes pouvant être interrompu par un noyau aromatique ou par un oxygène,
- les composés issus de ces dérivés pour obtenir un biuret, un dimère, un trimère.
- il convient de citer le(s) prépolymère(s) de ces produits, lesquels sont formés par la réaction de fonction(s) isocyanate sur un diol dans des proportions qui définissent le nombre des motifs du prépolycondensat et assure que la quasi-totalité des fonctions terminales soient isocyanates.

On peut également citer les composés d'addition des dérivés ci-dessus sur des polyols ayant au moins 3 fonctions alcools.

Les fonctions isocyanates sont avantageusement masquées (ce terme est préférable à celui de "bloquées" souvent utilisés dans les textes d'origines Anglosaxonne ou qui y sont acculturés, et ce pour deux raisons la fonction isocyanate a effectivement réagi en sorte qu'il ne sont plus du tout isocyanate et lorsque l'on les "libère" il n'est en aucun cas assuré que l'on passe par un intermédiaire isocyanate, deuxièmement ce masquage n'est pas absolu puisque à certaine température on retrouve progressivement de propriétés similaire au isocyanate).

Selon un des modes les plus surprenants de la présente invention, il a pu être montré que la technique d'émulsion utilisée permettait d'obtenir des émulsions stable de (poly)isocyanate(s) non masqué(s).

La relative instabilité chimique des isocyanates en présence de phases contenant des molécules d'eau non seulement n'a pas empêché de réaliser l'émulsion dont la stabilité physique est remarquable, mais encore semble avoir été significativement réduite par la mise en émulsion. Il semble dans une mesure qui dépend notamment de la dilution, des agents tensioactifs et des émulsifiants que la technique d'émulsion protège pour un temps les (poly)isocyanates de la décomposition chimique.

Ainsi les (poly)isocyanate(s) avantageusement masqué(s) peuvent avantageusement répondre à la formule suivante :

A(-NCObloc)ₚ (Formule I)

où A représente un squelette organique présentant n valences libres, p étant compris entre 2 et 7 (intervalle fermé) avantageusement entre 2 et 4 (intervalle fermé) ;
où NCObloc représente une fonction isocyanate avantageusement masquée (ou protégée) ou non.

Il convient de mentionner que le nombre total de carbones du dit monomère est avantageusement compris entre 10 et 100, préférentiellement compris entre 20 et 100, plus préférentiellement entre 25 et 75.

Le squelette A peut être constitué à partir d'une polyamine (y compris les anilines) lourde par exemple présentant un nombre de carbone au moins égale à 6 avantageusement à 10, de préférence à 15 [que l'on transforme en isocyanate par action du phosgène de manière en soi connue].

Le squelette A peut également être celui des trimères et des biurets.

Parmi les groupes masquant on peut choisir les groupements à hydrogène mobile dont le pKa est au plus égal à 14, avantageusement à 12 de préférence à 10 plus préférentiellement 8.

Plus le pKa est élevé, plus il est souhaitable que l'agent masquant soit volatil.

Les agents masquant sont choisis de manière que l'émulsion soit stable à sa température de conservation.

Parmi les fonctions chimiques susceptibles de masquer les isocyanates on peut citer à titre d'exemples, ou plutôt de paradigme les fonctions suivantes :
- les alcools et les thiols
- les oximes
- les hydroxylamines
- les acides
- les amides et les imides
- les bétadicétones
- les pyrazoles

La phase (poly)isocyanate(s) avantageusement masqué(s) (A) peut avantageusement être choisie parmi les phases de la liste ci-après :
. Une huile et/ou une gomme et/ou une résine à groupement (poly)isocyanate de viscosité au moins égale à 3 Pa.s., de préférence de l'ordre de 30 à 2.500 Pa.s. Ou de consistance de l'ordre de 200 à 2.000.
. Un mélange d'huile(s) et/ou de gomme(s) et/ou de résine(s) à groupement (poly)isocyanate, mélange de viscosité au moins égale à 3 Pa.s., de préférence de l'ordre de 30 à 2.500 Pa.s. Ou de consistance de l'ordre de 200 à 2.000.
. Un mélange d'huile(s) et/ou gomme(s) et/ou résine(s) à groupes (poly)isocyanate(s) avantageusement masqué(s) (s) et d'au moins un solvant (ou diluant) de ladite huile et/ou gomme et/ou résine, mélange de viscosité au moins égale à 3 Pa.s., de préférence de l'ordre de 30 à 2.500 Pa.s. Ou de consistance de l'ordre de 200 à 2.000.

Les agents tensioactifs (B) mis en oeuvre peuvent être non-ioniques de HLB supérieur à 10, de préférence de l'ordre de 10 à 20 , anioniques, cationiques, zwitterioniques ou amphotères de HLB supérieur à 10.

Les agents tensioactifs non-ioniques peuvent être choisis parmi les acides gras alcoxylés, les alcoylphénols polyalcoxylés, les alcools gras polyalcoxylés, les amides gras polyalcoxylés ou polyglycérolés, les alcools et les alphadiols polyglycérolés, les polymères blocs oxyde d'éthylène-oxyde de propylène ... Ainsi que les alcoylglucosides, les alcoylpolyglucosides, les sucroéthers, les sucroesters, les sucroglycérides, les esters de sorbitan,... Et les composés éthoxylés de ces dérivés de sucres, présentant un HLB d'au moins 10.

Les agents tensioactifs anioniques peuvent être choisis parmi les alcoylbenzènes sulfonates, les sulfates de monoalcoyle, les alcoyléthersulfates, les alcoylaryléthersulfates, les dialcoylsulfosuccinates, les alcoylphosphates, les étherphosphates, de métaux alcalins... présentant un HLB d'au moins 10.

Parmi les agents tensioactifs cationiques on peut citer les amines grasses aliphatiques ou aromatiques, les amides gras aliphatiques, les dérivés d'ammonium quaternaire... présentant un HLB d'au moins 10.

Parmi les agents tensioactifs zwitterioniques ou amphotères, on peut citer les bétaïnes et leurs dérivés, les sultaïnes et leur dérivés, les lécithines, les dérivés d'imidazolines, les glycinates et leurs dérivés, les amidopropionates, les oxydes d'amines grasses .... présentant un HLB d'au moins 10.

Les polymères épaississants (C) sont solubles à au moins 50 % dans l'eau ; à titre d'exemples de polymères épaississants, on peut citer :
- Ceux obtenus par synthèse chimique, tels que les alcools polyvinyliques, les polyéthylènes glycols, les polyvinylpyrrolidones, les polyacrylates de métaux alcalins ...
- Ceux extraits de végétaux et éventuellement modifiés, tels que les carraghénates, les alginates, les méthylcelluloses, les hydroxypropylcelluloses, les hydroxyéthylcelluloses ...

Les quantités relatives d'eau, d'agent(s) tensioactif(s) et de polymère(s) épaississant(s) éventuel(s) sont fonctions de la viscosité de la phase (poly)isocyanate(s) avantageusement masqué(s) comprenant au moins une huile et/ou une gomme et/ou une résine à groupement (poly)isocyanate ainsi que de la nature du (mélange de) tensioactif(s) et de la nature du (mélange de) polymère(s) épaississant(s) éventuel(s).

En l'absence de polymère épaississant, le rapport pondéral eau / eau+agent(s) tensioactif(s) est par exemple de l'ordre de 20/100 à 70/100, préférentiellement de l'ordre 25/100 à 60/100 pour stabiliser une émulsion d'une phase (poly)isocyanate(s) avantageusement masqué(s) consistant en une huile à groupement (poly)isocyanate de viscosité de l'ordre de 30 Pa.s.à 500 Pa.s., à l'aide d'un nonylphénol présentant 9 ou 10 motifs éthoxy comme seul agent tensioactif.

La mise en oeuvre d'une phase aqueuse constituée d'eau et dodécylsulfate de sodium comme seul agent tensioactif, selon un rapport pondéral eau/eau+agent tensioactif de 5/7 et renfermant de 0,5 à 2 % de son poids d'hydroxyéthylcellulose comme polymère épaississant, permet la stabilisation d'huiles de viscosité de l'ordre de 5 Pa.s. A 30 Pa.s..

Surtout lorsque les isocyanates ne sont pas masqués, Il est préférable de choisir des agents épaississant et des tensioactifs qui sont sensiblement inertes vis à vis des fonctions isocyanates dans les conditions de frabrication de l'émulsion, notamment à la température à laquelle se fait l'émulsion, et dans les conditions de stockage.

L'opération de mise en émulsion de la phase (poly)isocyanate(s) avantageusement masqué(s) peut être réalisée :
■ par l'introduction d' au moins une huile et/ou une gomme et/ou au moins une résine + solvant(s) éventuel(s)+ (poly)isocyanate éventuel(s) dans un mélange eau + agent(s) tensioactif(s)+ polymère(s) hydrosoluble(s) éventuel(s), la ou les charges(s) éventuelle(s) étant présente(s) dans le mélange aqueux et/ou introduite(s) dans ledit mélange, puis malaxage à une température de l'ordre de 10 à 50 °C dans des malaxeurs du type extrudeuses à vis simple ou multiple(s), malaxeurs planétaires à turbine, malaxeurs statiques, malaxeurs à pale, à hélice, à bras ;
■ ou, de préférence, par introduction de l'eau dans un mélange huile(s) et/ou gomme(s) et/ou résine(s) présente(s) en totalité ou partiellement [par exemple 50-90 % de la quantité totale d'huile(s) et/ou gomme(s) et/ou résine(s)]+ solvant(s) éventuel(s)+ charge(s) éventuelle(s)+ agent(s) tensioactif(s) + polymère(s) hydrosoluble(s) éventuel(s), puis malaxage à une température de l'ordre de 10 à 50 °C dans des malaxeurs du type extrudeuses à vis simple ou multiple(s), malaxeurs planétaires à turbine, malaxeurs statiques, malaxeurs à pale, à hélice, à bras ... La quantité éventuellement restante d'huile(s) et/ou gomme(s) et/ou résine(s) étant introduite dans le milieu après la formation de l'émulsion "huile dans eau" tout en maintenant le malaxage.

Un des intérêts de la présente invention réside dans l'utilisation d' appareils développant des cisaillements relativement faibles, en général au moins égal à 10² mais avantageusement au plus égal à 10⁵ préférence à 10⁴, plus préférentiellement autour de 10³. Ces mesures de références sont réalisées en phase continue eau pure.

Les émulsions d'huiles et/ou de gommes et/ou résines (poly)isocyanate(s) avantageusement masqué(s) obtenues selon le procédé de l'invention sont particulièrement stables au stockage ; elles peuvent être très fines et monodispersées ; leur taux d'extrait sec peut aller de 25 (ou moins selon l'application visée desdites émulsions) à 98 %, le réglage de l'extrait sec pouvant être réalisé par dilution.

Il est possible d'obtenir des émulsions avec de taux de diluants organiques aussi variés que possible ; il est ainsi possible d'obtenir des émulsions ne présentant pas de diluants organiques.

Lorsque l'on désire mettre en émulsion un tolonate non masqué, il est préférable que le taux d'extrait sec soit aussi élevé que possible en général au moins supérieur au 3/4 avantageusement au 9/10 de préférence au 19/20.

Selon l'invention il est possible de d'obtenir de telles émulsions, soit directement, par exemple à température plus élevée, soit en réalisant une émulsion avec diluant organique, émulsion qui sera ultérieurement traitée pour évaporer les dits diluants organiques.

Il va de soi que l'on aura choisi les diluants organiques de manière qu'ils soient facilement évaporable en présence d'eau.

Ces émulsions peuvent être utilisées pour la préparation de compositions à base de (poly)isocyanate(s) dans quasiment toutes leurs utilisations...

L'invention vise également une émulsion de mélanges des (poly)isocyanate(s) avec les composés qui doivent être polycondensés avec lui, et ce notamment lorsque les (poly)isocyanate(s) sont masqués.

En particulier ces émulsions peuvent être utile pour, et utilisable dans les peintures.

La composition des peintures peuvent comprendre aussi une base colorée. Constituée d'un pigment et d'oxyde de titane.

Avantageusement, la phase aqueuse contient des oligo- ou poly-mères solubles de type polyol, ou condensat polyol-(poly)amine ou polyester-polyol en quantité suffisante pour permettre la polycondensation finale.

Soit le(s) réactif(s) de condensation est liposoluble et dans ce cas on réalise l'émulsion en introduisant le(s)dit(s) réactif(s) dans la phase (poly)isocyanate(s) (phase discontinue) ou en les émulsionnant séparément et mélangeant les diverses émulsions dont la phase continue est la phase aqueuses ; soit le(s) réactif(s) sont hydrosolubles et ils peuvent, avec des agents tensioactif appropriés, servir d'agent de dilution de la phase aqueuse (phase continue).

Ce sont les polyols utilisés usuellement lors des condensations avec les isocyanates courants.

Notamment lorsque les isocyanates ne sont pas masquées, parmi les polyols on peut notamment utiliser ceux qui sont mentionnés dans la demande de brevet européen publié sous le N°0358979.

Lorsque les (poly)isocyanate(s) sont masqués, l'une ou l'autre phase peut contenir un catalyseur de "démasquage" sous une forme appropriée connue en elle même. Ainsi, selon un mode de réalisation de l'invention la composition comporte en outre un catalyseur de déblocage des fonctions isocyanates.(cf. Journal of Applied Polymer Science "Catalysis of the Isocyanate - Hydroxyl Reaction" vol. IV, issue N°11, p. 207, (1960), J. W. BRITAIN).

Ces catalyseurs sont en eux-mêmes connus et sont avantageusement choisis parmi ceux qui induisent une température de libération des fonctions isocyanates au plus égale à la température usuelle des opérations ultimes de prise du vemis ou de la peinture ou d'équivalents.

La température de libération induite par les catalyseurs est avantageusement au moins égale à 100'C environ.

Il convient de signaler que les groupes protecteurs se libèrent plus facilement si l'azote de la fonction isocyanate protégée est liée à un carbone insaturé notamment aromatique, ce qui peut être parfois un inconvénients.

Dans l'application revêtement il est préférable que l'azote de la fonction isocyanate protégée soit liée à un carbone saturé (hybridation sp³). Dans le cas où les isocyanates sont non masqués ; de tels isocyanates liés à un carbone saturé (hybridation sp³) résistent bien à l'hydrolyse surtout dans le cas où ledit carbone est secondaire et de préférence tertiaire.

Le squelette A peut également être celui des trimères et des biurets.

La taille moyenne des gouttelettes est avantageusement comprise entre 0,01 µm et 20 µm, de préférence entre 0,1 µm et 10 µm.

Les exemples sont donnés à titre indicatif et ne peuvent être considérés comme une limite du domaine et de l'esprit de l'invention.

### Définition

Le TOLONATE utilisé ici est le produit de la trimérisation de l'hexamethylène diisocyanate

Le tolonate D2 est le produit de la trimérisation de l'hexamethylène diisocyanate avantageusement masqué par la méthyl éthylcétoxime et diluée par un fraction pétrolière aromatique [Solvesso 100 (marque déposée)] jusque à ce que ce dernier atteigne 25 % en volume.

### Exemple 1 :

Dans un réacteur fermé de 250 cm³ muni d'un système d'agitation à pale raclante (modèle IKA (marque déposée), on introduit :
2,5 g d'Antarox 461 P (marque déposée)
2,5 g d'eau

Le mélange est agité à 150 tours/min.⁻¹ pendant 5 minutes. Il se forme une pâte épaisse de viscosité dynamique de 780 Pa.s pour un gradient de cisaillement 1 s⁻¹. On ajoute en 20 minutes environ, sous agitation constante à environ 350 tours/min⁻¹ 85 g de TOLONATE D2 (marque déposée), de viscosité dynamique 4,2 Pa.s pour un gradient de cisaillement de 1⁻¹.

A la fin de l'introduction du TOLONATE D2 (marque déposée), le mélange est malaxé sous la même agitation de façon à atteindre une granulométrie limite.

On ajoute 10 g d'eau.

L'émulsion obtenue présente un extrait sec de 87,5 % et une granulométrie mesurée au granulomètre laser SYMPATEC (marque déposée) de 0,6 µm avec une distribution de taille d₉₀ - d₁₀ égale à 0,70 µm.

### Exemple 2 :

On répète l'opération décrite précédemment avec d'une part :
0,7 g d'Antarox 461 P (marque déposée)
0,9 g d'eau
et d'autre part 15 g de TOLONATE (marque déposée) bloqué méthyl cétoxime à 15 % dans le SOLVESSO. Cet isocyanate présente une viscosité dynamique de 57 Pa.s pour un gradient de cisaillement de 1 s⁻¹. A la fin de l'addition du TOLONATE (marque déposée), l'émulsion est agitée une dizaine de minutes puis diluée avec de l'eau pour avoir un extrait sec en TOLONATE (marque déposée) de 70 %. L'émulsion finale a une granulométrie mesurée au granulomètre laser SYMPATEC (marque déposée) de 1,1 µm avec une distribution de taille d₉₀ - d₁₀ égale à 1,2 µm.

### Exemple 3 :

On répète l'opération décrite dans l'exemple 1, avec d'une part les mêmes agents de surface et d'autre part le TOLONATE (marque déposée) bloqué ε-caprolactame à 25 % dans le RPDE de viscosité dynamique 7,2 Pa.s pour un gradient de cisaillement de 1 s⁻¹.

L'émulsion est maintenue sous une agitation d'une quinzaine de minutes à 350 tours/min-1 pour avoir une granulométrie moyenne mesurée au granulomètre laser SYMPATEC (marque déposée) de 0,55 µm avec une distribution de taille d₉₀-d₁₀ égale à 0,75 µm.

### Exemple 4 :

On répète l'opération décrite dans l'exemple 1, avec d'une part les mêmes agents de surface et d'autre part un mélange de résine de polyesters hydoxylé DESMOPHEN 690 (marque déposée) et de TOLONATE D2 (marque déposée) dans le rapport massique de 1/1 ayant une viscosité dynamique 21 Pa.s pour un gradient de cisaillement de 1 s⁻¹.

L'émulsion est maintenue sous une agitation d'une quinzaine de minutes à 300 tours/min-1 pour avoir une granulométrie moyenne mesurée au granulomètre laser SYMPATEC (marque déposée) de 1,1 µm avec une distribution de taille d₉₀-d₁₀ égale à 1,4 µm.

L'émulsion finale est diluée avec de l'eau pour avoir un extrait sec de 85 %.

### Exemple 5 :

Dans un réacteur fermé de 250 cm³ muni d'un système d'agitation à pale raclante, on introduit :
2,0 g de TTAB, tensioactif cationique
3,0 g d'eau

Le mélange est agité à 150 tours/min-1 pendant 5 minutes. Il se forme une pâte épaisse de viscosité dynamique de 86 Pa.s pour un gradient de cisaillement 1 s⁻¹.

On ajoute en 120 minutes environ, sous agitation constante à environ 350 tours/min⁻¹ 80 g de TOLONATE D2a (marque déposée), de viscosité dynamique 5 Pa.s pour un gradient de cisaillement de 1 s⁻¹. La granulométrie de l'émulsion est mesurée pour chaque ajout de 10 g. La polydispersité de l'émulsion est suivie de façon à obtenir une distribution de taille D90-D10 voisine de 0,5 (courbe).

A la fin de l'introduction du TOLONATE D2a (marque déposée), on ajoute 10 g d'eau

L'émulsion obtenue présente un extrait sec de 82 % et une granulométrie mesurée au granulomètre laser SYMPATEC (marque déposée) de 0,75 µm avec une distribution de taille d₉₀-d₁₀ égale à 0,95 µm.

### Exemple 6 :

Dans un bêcher de 200 cm³ on introduit sous agitation constante à 300 tour/min⁻¹ :
4,0 g de sodium dodécyl sulfate, tensioactif anionique
4,0 d'eau.

Il se forme une pâte épaisse de viscosité dynamique de 93 Pa.s pour un gradient de cisaillement 1 s⁻¹, à laquelle on ajoute lentement sous la même agitation 91,5 g de TOLONATE D2 (marque déposée) et 2 g d'eau.

Après addition, l'agitation est poursuivie pendant 10 minutes en maintenant constantes les proportions des divers constituants.

L'émulsion concentrée est diluée par addition d'eau, toujours sous la même agitation pendant 5 minutes. L'émulsion finale a la composition suivante : 73 % de TOLONATE D2 (marque déposée), 3,2 % de dodécyl de sulfate de sodium et 23,8 % d'eau et une granulométrie mesurée au granulomètre laser SYMPATEC (marque déposée) de 0 ; 97 µm avec une distribution de taille d₉₀-d₁₀ égale à 1,45 µm.

### Exemple 7 :

Dans un réacteur fermé de 250 cm³ muni d'un système d'agitation à pale raclante (modèle IKA (marque déposée), on introduit :
2,0 g de TTAB tensio actif cationique
3,0 g d'eau

Le mélange est agité à 150 tours/min.⁻¹ pendant 5 minutes. Il se forme une pâte épaisse de viscosité dynamique de 86 Pa.s pour un gradient de cisaillement 1 s⁻¹. On ajoute en 20 minutes environ, sous agitation constante à environ 350 tours/min⁻¹ 85 g de TOLONATE HDT (marque déposée) non masqué.

A la fin de l'introduction du TOLONATE D2 (marque déposée), le mélange est malaxé sous la même agitation de façon à atteindre une granulométrie limite.

On ajoute 30 g d'eau.

L'émulsion obtenue présente un extrait sec de 87,5 % et une granulométrie mesurée au granulomètre laser SYMPATEC (marque déposée) de 0,8 µm avec une distribution de taille d₉₀ - d₁₀ égale à 1 µm.

## Revendications

1. Procédé de préparation d'émulsions aqueuses d'huiles et/ou de gommes et/ou de résines (poly)isocyanate(s), **caractérisé en ce qu'**on malaxe un mélange comportant
• 100 parties en poids d'une phase (poly)isocyanate avantageusement masqué (A) de viscosité dynamique à 25°C, au moins égale à 3 Pa.s., de préférence au moins égale à 30 Pa.s., ou de consistance à 25°C au moins égale à 200, phase (poly)isocyanate avantageusement masqué comprenant au moins une huile et/ou au moins une gomme et/ou au moins une résine à groupes (poly)isocyanate(s) avantageusement masqué(s) ;
• 2 à 20 parties en poids, de préférence de 3 à 15 parties en poids d'eau ;
• 3 à 20 parties en poids, de préférence de 5 à 15 parties en poids d'au moins un agent tensioactif (B) ou une combinaison de 0,5 à 10 parties en poids, de préférence de 1 à 10 parties en poids d'au moins un agent tensioactif (B) et de 2,5x10⁻⁴ à 20 parties en poids, de préférence de 0,001 à 15 parties en poids d'au moins un polymère hydrosoluble épaississant (C) de masse moléculaire supérieure à 10 000 g/mole, de préférence supérieure à 100 000 g/mole;
ledit agent tensioactif ou mélange d'agents tensioactifs présentant une HLB supérieure à 10 et les quantités relatives d'eau, de(s) constituant(s) (B) et éventuellement (C) étant telles que la viscosité ou la consistance du mélange eau + agent(s) tensioactif(s) + polymère(s) hydrosoluble(s) épaississant(s) éventuel(s) soit égale ou supérieure au dixième de la viscosité ou consistance de la phase (poly)isocyanate avantageusement masqué (A), de préférence égale ou supérieure à la viscosité ou à consistance de la phase (poly)isocyanate avantageusement masqué (A);
ledit malaxage étant réalisé dans un appareillage assurant un cisaillement dans l'eau pure au moins égal à 10² et au plus égal à 10⁵, pendant une durée suffisante pour obtenir une émulsion de type "huile dans eau" de granulométrie de l'ordre de 0,1 à 5 micromètres, de préférence de l'ordre de 0,2 à 3 micromètres,
puis **en ce qu'**on dilue éventuellement le milieu avec de l'eau en fonction du taux d'extrait sec désiré.

2. Procédé selon la revendication 1, **caractérisé en ce que** la phase (poly)isocyanate(s) (A) est choisie parmi les phases suivantes consistant respectivement en :
· une huile et/ou une gomme et/ou une résine à groupes (poly)isocyanate(s) de viscosité au moins égale à 3 Pa.s., de préférence de l'ordre de 30 à 2.500 Pa.s., ou de consistance de l'ordre de 200 à 2.000 ;
· un mélange d'huile(s) et/ou de gomme(s) et/ou de résine(s) à groupes (poly)isocyanate(s), mélange de viscosité au moins égale à 3 Pa.s., de préférence de l'ordre de 30 à 2.500 Pa.s., ou de consistance de l'ordre de 200 à 2.000 ;
· un mélange d'huile(s) et/ou gomme(s) et/ou résine(s) à groupes (poly)isocyanate(s) et d'au moins un solvant de ladite huile et/ou gomme et/ou résine, mélange de viscosité au moins égale à 3 Pa.s., de préférence de l'ordre de 30 à 2.500 Pa.s., ou de consistance de l'ordre de 200 à 2.000.

3. Procédé selon l'une des revendications 1 et 2, **caractérisé en ce que** les agents tensioactifs (B) sont nons-ioniques de HLB supérieure à 10, anioniques, cationiques, zwitterioniques ou amphotères.

4. Procédé selon l'une des revendications 1 à 3, **caractérisé en ce que** les polymères épaississants (C) sont solubles à au moins 50% dans l'eau et sont choisis parmi les alcools polyvinyliques, les polyéthylènes glycols, les polyvinylpyrrolidones, les polyacrylates de métaux alcalins, les carraghénanes, les alginates, les méthylcelluloses, les hydroxypropylcelluloses, les hydroxyéthylcelluloses.

5. Procédé selon l'une des revendications 1 à 4, **caractérisé en ce que** l'opération de mise en émulsion de la phase (poly)isocyanate(s) est réalisée par introduction d'au moins une huile et/ou une gomme et/ou au moins une résine dans un mélange eau + agent(s) tensioactif(s) + polymère(s) hydrosoluble(s) éventuel(s), puis malaxage à une température de l'ordre de 10 à 50°C dans des malaxeurs du type extrudeuses à vis simple ou multiple(s), malaxeurs planétaires à turbine, malaxeurs statiques, malaxeurs à pale, à hélice, à bras.

6. Procédé selon l'une des revendications 1 à 5, **caractérisé en ce que** lesdites huiles et/ou gommes et/ou résines (poly)isocyanate(s) sont masqués.

7. Emulsion de type huile dans l'eau, **caractérisée par le fait qu'**elle contient au moins :
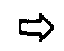 100 parties en poids d'une phase (poly)isocyanate avantageusement masqué (A), de viscosité dynamique à 25°C, au moins égale à 3 Pa.s., de préférence au moins égale à 30 Pa.s., ou de consistance à 25°C au moins égale à 200, phase (poly)isocyanate avantageusement masqué comprenant au moins une huile et/ou au moins une gomme et/ou au moins une résine à groupes (poly)isocyanate(s) avantageusement masqué(s) ;
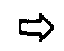 2 à 20 parties en poids, de préférence de 3 à 15 parties en poids d'eau ;
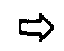 3 à 20 parties en poids, de préférence de 5 à 15 parties en poids d'au moins un agent tensioactif (B) ou une combinaison de 0,5 à 10 parties en poids, de préférence de 1 à 10 parties en poids d'au moins un agent tensioactif (B) et de 2,5x10⁻⁴ à 20 parties en poids, de préférence de 0,001 à 15 parties en poids d'au moins un polymère hydrosoluble épaississant (C) de masse moléculaire supérieure à 10 000 g/mole, de préférence supérieure à 100 000 g/mole ;
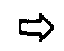 ledit agent tensioactif ou mélange d'agents tensioactifs présentant un HLB supérieur à 10 et les quantités relatives d'eau de(s) constituant(s) (B) et éventuellement (C) étant telles que la viscosité ou la consistance du mélange eau + agent(s) tensioactif(s) + polymère(s) hydrosoluble(s) épaississant(s) éventuel(s) soit égale ou supérieure au dixième de la viscosité ou consistance de la phase (poly)isocyanate avantageusement masqué (A), de préférence égale ou supérieure à la viscosité ou consistance de la phase (poly)isocyanate avantageusement masqué (A) ;
**par le fait qu'**elle est de granulométrie de l'ordre de 0,2 à 3 micromètres, qu'elle présente une faible dispersion avec un d₉₀-d₁₀ au plus égal à 4 micromètres, plus généralement à 1,5, de préférence à 1 micromètre, et **par le fait qu'**elle est susceptible d'être obtenue par le procédé selon l'une des revendications 1 à 6, et **par le fait que** l'azote des fonctions isocyanates est lié à un carbone saturé.

8. Emulsion de type huile dans l'eau selon la revendication 7, **caractérisée par le fait que** ladite émulsion comporte le(s) réactif(s) de condensation qui doivent être polycondensés avec le(s) (poly)isocyanate(s).

9. Emulsion de type huile dans l'eau selon les revendications 7 et 8, **caractérisée par le fait que** ledit réactif de condensation :
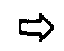 soit est liposoluble et dans ce cas le(s)dit(s) réactif(s) sont dans la phase (poly)isocyanate(s) (phase discontinue) ou sous forme d'émulsion séparée ;
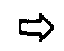 soit le(s) réactif(s) sont hydrosolubles et servent d'agent de dilution de la phase aqueuse (phase continue).

10. Emulsion de type huile dans l'eau selon les revendications 7 à 9, **caractérisée par le fait que** ledit (poly)isocyanate est choisi parmi :
· les polyméthylènes diisocyanates (en général en ω, ω'), l'enchaînement des méthylènes pouvant être interrompu par un noyau aromatique ou par un oxygène,
· les composés issus de ces dérivés pour obtenir un biuret, un dimère, un trimère,
· le(s) prépolymère(s) de ces produits, lesquels sont formés par la réaction de fonction(s) isocyanate(s) sur un diol dans des proportions qui définissent le nombre des motifs du prépolycondensat et assure que la quasi-totalité des fonctions terminales soient isocyanates.
· Les composés d'addition des dérivés ci-dessus sur des polyols ayant au moins 3 fonctions alcools.

11. Emulsion de type huile dans l'eau selon les revendications 7 à 10, **caractérisée par le fait que** ledit au moins un (poly)isocyanate(s) est masqués.

12. Emulsion de type huile dans l'eau selon les revendications 7 à 11, **caractérisée par le fait qu'**elle comporte, en outre, un catalyseur de déblocage des fonctions isocyanates.

13. Emulsion de type huile dans l'eau selon les revendications 11 à 12, **caractérisée par le fait que** ledit au moins un (poly)isocyanate(s) est masqué avec groupement à hydrogène mobile dont le pKa est au plus égal à 14 , avantageusement à 12 de préférence à 10.

14. Emulsion de type huile dans l'eau selon la revendication 13, **caractérisée par le fait que** ledit groupement présentent l'une des fonctions chimiques susceptibles de masquer les isocyanates suivantes :
- les alcools et les thiols
- les oximes
- les hydroxylamines
- les acides
- les amides et les imides
- les bétadicétones
- les pyrazoles.

## Patentansprüche

1. Verfahren zur Herstellung von wässrigen Emulsionen von Ölen und/oder Gummis und/oder Harzen von (Poly)isocyanat(en), **dadurch gekennzeichnet, dass** eine Mischung geknetet wird, die enthält:
• 100 Gew.-Teile einer vorzugsweise maskierten (Poly)isocyanat-Phase (A) mit einer dynamischen Viskosität bei 25°C von wenigstens 3 Pa.s., bevorzugt wenigstens 30 Pa.s., oder mit einer Konsistenz bei 25°C von wenigstens 200, wobei die vorzugsweise maskierte (Poly)isocyanat-Phase wenigstens ein Öl und/oder wenigstens ein Gummi und/oder ein Harz mit vorzugsweise maskierten (Poly)isocyanat-Gruppe(n) enthält;
• 2 bis 20 Gew.-Teile, bevorzugt 3 bis 15 Gew.-Teile Wasser;
• 3 bis 20 Gew.-Teile, bevorzugt 5 bis 15 Gew.-Teile von wenigstens einem grenzflächenaktivem Mittel (B) oder einer Kombination von 0,5 bis 10 Gew.-Teilen, bevorzugt 1 bis 10 Gew.-Teilen, von einem grenzflächenaktivem Mittel (B) und 2,5 x 10⁻⁴ - 20 Gew.-Teile, bevorzugt 0,001 bis 15 Gew.-Teile, von wenigstens einem wasserlöslichen, verdickend wirkendem Polymeren (C), mit einem Molekulargewicht über 10.000 g/Mol, bevorzugt über 100.000 g/Mol;
wobei das grenzflächenaktive Mittel oder die Mischung von grenzflächenaktiven Mitteln eine HLB von größer als 10 aufweisen, und wobei die relativen Mengen an Wasser, an Komponente(n) (B) und eventuell (C) so vorliegen, dass die Viskosität oder die Konsistenz der Mischung Wasser + grenzflächenaktive(s) Mittel + eventuell(es) wasserlösliche(s), verdickend wirkende(s) Polymer(e) gleich oder höher sind als ein Zehntel der Viskosität oder Konsistenz der vorzugsweise maskierten (Poly)isocyanat-Phase (A), bevorzugt gleich oder höher als die Viskosität oder Konsistenz der vorzugsweise maskierten (Poly)isocyanat-Phase (A) ;
wobei das Kneten in einer Apparatur durchgeführt wird, die sicherstellt, dass eine Scherbeanspruchung in reinem Wasser von wenigstens 10² bis maximal 10⁵ auftritt, während einer Dauer, die ausreicht, eine Öl-in-Wasser-Emulsion mit einer Granulometrie in der Größenordnung von 0,1 bis 5 µm, bevorzugt in der Größenordnung von 0,2 bis 3 µm, zu erhalten;
und dass anschließend das Medium gegebenenfalls mit Wasser verdünnt wird in Abhängigkeit des gewünschten Feststoffgehalts.

2. Verfahren gemäß Anspruch 1, **dadurch gekennzeichnet, dass** die Phase von (Poly)isocyanat(en) (A) ausgewählt ist aus den folgenden Phasen, die jeweils enthalten:
• ein Öl und/oder Gummi und/oder Harz mit (Poly)isocyanat-Gruppe(n) mit einer Viskosität von wenigstens 3 Pa.s., bevorzugt in der Größenordnung von 30-2500 Pa.s., oder einer Konsistenz in der Größenordnung von 200 bis 2.000;
• eine Mischung aus Öl(en) und/oder Gummi(s) und/oder Harz(en) mit (Poly)isocyanat-Gruppe(n), wobei die Mischung eine Viskosität von wenigstens 3 Pa.s., bevorzugt in der Größenordnung von 30 bis 2.500 Pa.s., oder eine Konsistenz in der Größenordnung von 200 bis 2.000 aufweist;
• eine Mischung aus Öl(en) und/oder Gummi(s) und/oder Harz(en) mit (Poly)isocyanat-Gruppe(n) und wenigstens einem Lösungsmittel dieses Öls und/oder Gummis und/oder Harzes, wobei die Mischung eine Viskosität von wenigstens 3 Pa.s., bevorzugt in der Größenordnung von 30 bis 2.500 Pa.s., oder eine Konsistenz in der Größenordnung von 200 bis 2.000 aufweist.

3. Verfahren gemäß einem der Ansprüche 1 oder 2, **dadurch gekennzeichnet, dass** die grenzflächenaktiven Mittel (B) nichtionisch mit einer HLB größer als 10, anionisch, kationisch, zwitterionisch oder amphoter sind.

4. Verfahren gemäß einem der Ansprüche 1 bis 3, **dadurch gekennzeichnet, dass** die verdickend wirkenden Polymeren (C) löslich sind in Wasser mit mindestens 50% und dass sie gewählt werden aus polyvinylischen Alkoholen, Polyethylenglykolen, Polyvinylpyrrolidonen, Alkalimetallpolyacrylaten, Karraghenanen, Alginaten, Methylcellulosen, Hydroxypropylcellulosen, und Hydroxyethylcellulosen.

5. Verfahren gemäß einem der Ansprüche 1 bis 4, **dadurch gekennzeichnet, dass** der Vorgang des in Emulsion Bringens der Phase von (Poly)isocyanat(en) durchgeführt wird durch Einführung von wenigstens einem Öl und/oder Gummi und/oder wenigstens einem Harz in eine Mischung aus Wasser + grenzflächenaktive(s) Mittel + eventuell(es) wasserlösliche(s) Polymer(e), anschließendem Kneten bei einer Temperatur von 10 bis 50°C in Knetmaschinen der Art von Ein- oder Mehrschneckenextrudern, in Planetenturbinenmischern, statischen Mischern, Schaufelmischern, Schneckenmischern und Flügelmischern.

6. Verfahren gemäß einem der Ansprüche 1 bis 5, **dadurch gekennzeichnet, dass** die Öle und/oder Gummis und/oder Harze von (Poly)isocyanat(en) maskiert sind.

7. Öl-in-Wasser-Emulsion, **dadurch gekennzeichnet, dass** sie wenigstens enthält:
• 100 Gew.-Teile einer vorzugsweise maskierten (Poly)isocyanat-Phase (A) mit einer dynamischen Viskosität bei 25°C von wenigstens 3 Pa.s., bevorzugt wenigstens 30 Pa.s., oder mit einer Konsistenz bei 25°C von wenigstens 200, wobei die vorzugsweise maskierte (Poly)isocyanat-Phase wenigstens ein Öl und/oder wenigstens ein Gummi und/oder ein Harz mit vorzugsweise maskierten (Poly)isocyanat-Gruppe(n) enthält;
• 2 bis 20 Gew.-Teile, bevorzugt 3 bis 15 Gew.-Teile Wasser;
• 3 bis 20 Gew.-Teile, bevorzugt 5 bis 15 Gew.-Teile von wenigstens einem grenzflächenaktivem Mittel (B) oder einer Kombination von 0,5 bis 10 Gew.-Teilen, bevorzugt 1 bis 10 Gew.-Teilen, von einem grenzflächenaktivem Mittel (B) und 2,5 x 10⁻⁴ - 20 Gew.-Teile, bevorzugt 0,001 bis 15 Gew.-Teile, von wenigstens einem wasserlöslichen, verdickend wirkendem Polymeren (C), mit einem Molekulargewicht über 10.000 g/Mol, bevorzugt über 100.000 g/Mol;
• wobei das grenzflächenaktive Mittel oder die Mischung von grenzflächenaktiven Mitteln eine HLB von größer als 10 aufweisen, und wobei die relativen Mengen an Wasser, an Komponente(n) (B) und eventuell (C) so vorliegen, dass die Viskosität oder die Konsistenz der Mischung Wasser + grenzflächenaktive(s) Mittel + eventuell(es) wasserlösliche(s), verdickend wirkende(s) Polymer(e) gleich oder höher sind als ein Zehntel der Viskosität oder Konsistenz der vorzugsweise maskierten (Poly)isocyanat-Phase (A), bevorzugt gleich oder höher als die Viskosität oder Konsistenz der vorzugsweise maskierten (Poly)isocyanat-Phase (A);
und dass sie eine Granulometrie in der Größenordnung von 0,2 bis 3 µm aufweist, dass sie eine schwache Dispersion mit einem D₉₀ - D₁₀ von maximal 4 µm aufweist, üblicherweise von 1,5, bevorzugt von 1 µm, und dass sie nach einem Verfahren gemäß einem der Ansprüche 1 bis 6 erhalten werden kann, und dass der Stickstoff der Isocyanatgruppen an einen gesättigten Kohlenstoff gebunden ist.

8. Öl-in-Wasser-Emulsion nach Anspruch 7, **dadurch gekennzeichnet, dass** die Emulsion Kondensationsreagenz(ien) enthält, die mit den (Poly)isocyanat(en) polykondensiert werden müssen.

9. Öl-in-Wasser-Emulsion nach einem der Ansprüche 7 oder 8, **dadurch gekennzeichnet, dass** das Kondensationsreagenz:
• entweder fettlöslich ist und in diesem Fall sind die Reagenz(ien) in der Phase von (Poly)isocyanat(en) (diskontinuierliche Phase) oder in Form einer separaten Emulsion;
• oder die Reagenz(ien) wasserlöslich sind und als Verdünnungsmittel der wässrigen Phase (kontinuierlich Phase) dienen.

10. Öl-in-Wasser Emulsion gemäß einem der Ansprüche 7 bis 9, **dadurch gekennzeichnet, dass** das (Poly)isocyanat ausgewählt ist aus:
• Polymethylendiisocyanaten (üblicherweise ω, ω'), die Kettenbildung der Methylene kann durch einen aromatischen Kern oder durch einen Sauerstoff unterbrochen sein,
• die Komponenten ausgehend von diesen Derivaten zur Herstellung von einem Biuret, einem Dimer, einem Trimer,
• die Präpolymere dieser Produkte, die hergestellt werden durch Reaktion der Isocyanatfunktion(en) mit einem Diol in Verhältnissen, die die Anzahl der Motive des Präpolykondensats bestimmen und sicherstellen, dass fast die gesamten Endgruppen Isocyanate sind,
• die Additionskomponenten der obigen Derivate mit Polyolen, die wenigstens drei Alkoholfunktionen aufweisen.

11. Öl-in-Wasser-Emulsion gemäß einem der Ansprüche 7 bis 10, **dadurch gekennzeichnet, dass** das wenigstens eine (Poly)isocyanat(e) maskiert ist.

12. Öl-in-Wasser Emulsion gemäß einem der Ansprüche 7 bis 11, **dadurch gekennzeichnet, dass** sie zusätzlich einen Katalysator zur Freisetzung der Isocyanatfunktionenn enthält.

13. Öl-in-Wasser Emulsion gemäß einem der Ansprüche 11-12, **dadurch gekennzeichnet, dass** das wenigstens eine (Poly)isocyanat(e) mit einer Gruppe mit einem mobilen Wasserstoff maskiert ist, wobei dessen pKₐ maximal 14, vorzugsweise 12 und bevorzugt 10 beträgt.

14. Öl-in-Wasser Emulsion gemäß Anspruch 13, **dadurch gekennzeichnet, dass** die Gruppe eine der folgenden chemischen funktionellen Gruppen, die zur Maskierung von Isocyanaten eingesetzt werden können, darstellt:
- Alkohole und Thiole
- Oxime
- Hydroxylamine
- Säuren
- Amide und Imide
- Betadicetone
- Pyrazole.

## Claims

1. Process for the preparation of aqueous emulsions of (poly)isocyanate oils and/or gums and/or resins, **characterized in that** a mixture comprising the following is blended
- 100 parts by weight of an advantageously masked (poly)isocyanate phase (A) of dynamic viscosity at 25°C at least equal to 3 Pa.s, preferably at least equal to 30 Pa.s, or of consistency at 25°C at least equal to 200, advantageously masked (poly)isocyanate phase including at least one oil and/or at least one gum and/or at least one resin containing advantageously masked (poly)isocyanate groups;
- 2 to 20 parts by weight, preferably from 3 to 15 parts by weight of water;
- 3 to 20 parts by weight, preferably from 5 to 15 parts by weight of at least one surface-active agent (B) or a combination of 0.5 to 10 parts by weight, preferably from 1 to 10 parts by weight of at least one surface-active agent (B) and of 2.5 × 10⁻⁴ to 20 parts by weight, preferably of 0.001 to 15 parts by weight of at least one thickening water-soluble polymer (C) of molecular mass which is higher than 10 000 g/mole, preferably higher than 100 000 g/mole;
the said surface-active agent or mixture of surface-active agents exhibiting an HLB which is higher than 10 and the relative quantities of water, of constituent(s) (B) and optionally (C) being such that the viscosity or the consistency of the mixture of water + surface-active agent(s) + optional thickening water-soluble polymer(s) is equal to or higher than one tenth of the viscosity or consistency of the advantageously masked (poly)isocyanate phase (A), preferably equal to or higher than the viscosity or consistency of the advantageously masked (poly)isocyanate phase (A); the said blending being carried out in an apparatus providing a shear in pure water at least equal to 10² and at most equal to 10⁵, over a period which is sufficient to obtain an emulsion of "oil-in-water" type with a particle size of the order of 0.1 to 5 micrometres, preferably of the order of 0.2 to 3 micrometres;
and **in that** the mixture is optionally diluted with water as a function of the desired solids content.

2. Process according to Claim 1, **characterized in that** the (poly)isocyanate phase (A) is chosen from the following phases consisting respectively of:
- an oil and/or a gum and/or a resin containing (poly)isocyanate groups of viscosity at least equal to 3 Pa.s, preferably of the order of 30 to 2,500 Pa.s. or of consistency of the order of 200 to 2,000;
- a mixture of oil(s) and/or gum(s) and/or resin(s) containing (poly)isocyanate groups, mixture of viscosity at least equal to 3 Pa.s, preferably of the order of 30 to 2,500 Pa.s. or of consistency of the order of 200 to 2,000;
- a mixture of oil(s) and/or gum(s) and/or resin(s) containing (poly)isocyanate groups and of at least one solvent for the said oil and/or gum and/or resin, mixture of viscosity at least equal to 3 Pa.s, preferably of the order of 30 to 2,500 Pa.s. or of consistency of the order of 200 to 2,000.

3. Process according to one of Claims 1 and 2, **characterized in that** the surface-active agents (B) are nonionic, of HLB higher than 10, anionic, cationic, zwitterionic or amphoteric.

4. Process according to one of Claims 1 to 3, **characterized in that** the thickening polymers (C) are soluble to at least 50% in water and are chosen from polyvinyl alcohols, polyethylene glycols, polyvinylpyrrolidones, alkali metal polyacrylates, carrageenans, alginates, methyl celluloses, hydroxypropyl celluloses and hydroxyethyl celluloses.

5. Process according to one of Claims 1 to 4, **characterized in that** the operation of emulsifying of the (poly)isocyanate phase is carried out by introducing at least one oil and/or one gum and/or at least one resin into a mixture of water + surface-active agent(s) + optional water-soluble polymer(s), and then blending at a temperature of the order of 10 to 50°C in mixers of the extruder type with single or multiple screw(s), turbine planet wheel mixers, static mixers, blade, screw and arm mixers.

6. Process according to one of Claims 1 to 5, **characterized in that** the said (poly)isocyanate oils and/or gums and/or resins are masked.

7. Emulsion of oil-in-water type, **characterized in that** it comprises at least:
- 100 parts by weight of an advantageously masked (poly)isocyanate phase (A) of dynamic viscosity at 25°C at least equal to 3 Pa.s, preferably at least equal to 30 Pa.s, or of consistency at 25°C at least equal to 200, advantageously masked (poly)isocyanate phase including at least one oil and/or at least one gum and/or at least one resin containing advantageously masked (poly)isocyanate groups;
- 2 to 20 parts by weight, preferably from 3 to 15 parts by weight of water;
- 3 to 20 parts by weight, preferably from 5 to 15 parts by weight of at one least surface-active agent (B) or a combination of 0.5 to 10 parts by weight, preferably from 1 to 10 parts by weight of at least one surface-active agent (B) and of 2.5 × 10⁻⁴ to 20 parts by weight, preferably of 0.001 to 15 parts by weight of at least one thickening water-soluble polymer (C) of molecular mass which is higher than 10 000 g/mole, preferably higher than 100 000 g/mole;
- the said surface-active agent or mixture of surface-active agents exhibiting an HLB which is higher than 10 and the relative quantities of water, of constituent(s) (B) and optionally (C) being such that the viscosity or the consistency of the mixture of water + surface-active agent(s) + optional thickening water-soluble polymer(s) is equal to or higher than one tenth of the viscosity or consistency of the advantageously masked (poly)isocyanate phase (A), preferably equal to or higher than the viscosity or consistency of the advantageously masked (poly)isocyanate phase (A) ;
**in that** it is of particle size of the order of 0.2 to 3 micrometres, **in that** it exhibits a small scatter with a d₉₀ - d₁₀ at most equal to 4 micrometres, more generally to 1.5, preferably to 1 micrometre, and **in that** it is obtainable by the process according to one of Claims 1 to 6, and **in that** the nitrogen of the isocyanate functional groups is bonded to a saturated carbon.

8. Emulsion of oil-in-water type according to Claim 7, **characterized in that** the said emulsion comprises condensation reactant(s) which must be polycondensed with the (poly)isocyanate(s).

9. Emulsion of oil-in-water type according to Claims 7 and 8, **characterized in that** the said condensation reactant;
- either is liposoluble and in this case the said reactant(s) are in the (poly)isocyanate phase (noncontinuous phase) or in the form of a separate emulsion;
- or the reactant(s) are water-soluble and are used as agent for diluting the aqueous phase (continuous phase).

10. Emulsion of oil-in-water type according to Claims 7 to 9, **characterized in that** the said (poly)isocyanate is chosen from:
- diisocyanate (generally ω,ω') polymethylenes, it being possible for the chain sequence of the methylenes to be interrupted by an aromatic nucleus or by an oxygen,
- the compounds obtained from these derivatives to give a biuret, a dimer or a trimer,
- the prepolymer(s) of these products, which are formed by the reaction of isocyanate functional group(s) with a diol in proportions which define the number of units of the prepoly-condensate and ensure that virtually all of the terminal functional groups are isocyanate groups,
- the addition compounds of the above derivatives with polyols having at least 3 alcohol functional groups.

11. Emulsion of oil-in-water type according to Claims 7 to 10, **characterized in that** the said at least one (poly)isocyanate is masked.

12. Emulsion of oil-in-water type according to Claims 7 to 11, **characterized in that** it additionally comprises a catalyst for deblocking the isocyanate functional groups.

13. Emulsion of oil-in-water type according to Claims 11 to 12, **characterized in that** the said at least one (poly)isocyanate is masked with a group containing mobile hydrogen whose pKa is at most equal to 14, advantageously to 12, preferably to 10.

14. Emulsion of oil-in-water type according to Claim 13, **characterized in that** the said group has one of the following chemical functional groups capable of masking isocyanates:
- alcohols and thiols
- oximes
- hydroxylamines
- acids
- amides and imides
- betadiketones
- pyrazoles.
